# EUROPÄISCHE PATENTSCHRIFT

(11) **EP 1 118 409 B1**
(45) Veröffentlichungstag und Bekanntmachung des Hinweises auf die Patenterteilung: **12.10.2005**
(21) Anmeldenummer: 01100536.0
(22) Anmeldetag: 10.01.2001
(51) Int. Cl.: B23D 25/12

(54) **Hochgeschwindigkeitsschere zum Querteilen von Walzband**
Flying shear
Cisaille volante

(30) Priorität: 19.01.2000 DE 10001928
(43) Veröffentlichungstag der Anmeldung: 25.07.2001
(73) Patentinhaber: SMS Demag AG, 40237 Düsseldorf (DE)
(72) Erfinder: Grafe, Horst, 57271 Hilchenbach (DE); Merz, Jürgen, 57223 Kreuztal (DE); Loth, Volker, 57258 Freudenberg (DE)
(74) Vertreter: Valentin, Ekkehard

(56) Entgegenhaltungen:
- EP-A- 0 162 020
- EP-A- 0 829 322
- DE-C- 464 803
- US-A- 1 948 139

## Beschreibung

Die Erfindung betrifft eine Hochgeschwindigkeitsschere zum Querteilen von Walzband mit paarweise gegenüberliegenden, in Rotation antreibbaren Messerträgern, die mit festem gegenseitigem Abstand in einer gemeinsamen Scherenkassette innerhalb eines äußeren Rahmens gelagert sind, wobei der Scherenkassette Hubmittel zum Heben und Senken innerhalb des Rahmens sowie Mittel zum Führen des Bandes relativ zur Schnittposition zugeordnet sind und jeder Messerträger als abgeflachter Körper ausgebildet ist..

Hochgeschwindigkeitsscheren der vorgenannten Art sind aus der Praxis allgemein bekannt.

Die DE 196 37 862 A1 beschreibt bspw. eine fliegende Schere mit auf einander gegenüberstehenden Trommeln angeordneten Messerkanten, die auf Vorschubgeschwindigkeit des zu schneidenden Bandes beschleunigbar und zur Durchführung eines Schnittes gegeneinander anstellbar sind. Die dieser Schere zugrundeliegende Erfindung besteht darin, daß die einander gegenüberliegenden Trommeln durch mindestens eine ihnen zugeordnete Antriebsvorrichtung auf eine der Geschwindigkeit des zu schneidenden Bandes entsprechende Umfangsgeschwindigkeit beschleunigbar sind, und daß mindestens einer der Trommeln eine separat ansteuerbare Anstellvorrichtung zugeordnet ist.

Die DE 197 46 528 A1 beschreibt eine Hochgeschwindigkeits-Schere, umfassend zwei Trommeln, von welchen eine mit Meißelmesser und die andere mit einem damit zusammen wirkenden Amboß ausgestattet bzw. als solche ausgebildet ist.

Mit Hilfe einer gesteuerten Stellvorrichtung werden beide Trommeln zum Trennvorgang eines durchlaufenden Walzbandes gegeneinander bewegt. Eine Synchronisierung der beiden Trommeln erfolgt mittels elektrischer, elektronischer oder getriebetechnischer Mittel.

Die EP 0 904 877 A2 offenbart eine Hochgeschwindigkeitsschere mit Messertrommeln von geringfügig unterschiedlichen Durchmessern, die mit geringer Geschwindigkeitsdifferenz über ein externes Verzweigungsgetriebe angetrieben werden. Mit Hilfe einer Anstellvorrichtung über Spreizhebel werden die Trommeln bei gegenüberliegender Position der Messer in Schneidposition gebracht und nach erfolgtem Schnitt des Walzbandes wieder von einander weg bewegt.

Die DE-OS 26 54 866 beschreibt eine fliegende Schere mit gekoppelten Messertrommeln. Sie umfaßt eine Trommeldrehvorrichtung mit einer beide Trommeln koppelnde Kraftübertragung für Geschwindigkeiten synchron mit der Laufgeschwindigkeit des zugeführten Materials, weiterhin eine Trommelstellvorrichtung zum Verstellen einer Schertrommel zwischen einer geöffneten Position und einer Schneidposition, sowie eine Steuereinrichtung für den Motor der Stellvorrichtung, welche das Anlaufen der ersten Schertrommel sowie das Anstellen in die Schneidposition und das Zurückbewegen der Trommel in die Ausgangsstellung steuert. Der konstruktive Aufwand sowohl für die Koppelung der Trommel, als auch für die Trommelstellvorrichtung sowie für die hierfür benötigte Steuereinrichtung ist außerordentlich groß und die Konstruktion ist störanfällig. Bei der Kraftübertragung sind fünf Zahnräder miteinander im Eingriff, so daß hierdurch verursachtes Spiel der Zahnflanken zu einer Winkelabweichung der miteinander zusammenwirkenden Trommelmesser und damit zu Beschädigungen oder zu unsauberen Schnitten führen kann.

Das Dokument EP-A-0162020 offenbart in einer gemeinsamen Kassette einer Schere die Anordnung eines Paars von Schneidenträgem innerhalb eines äußeren Rahmens. Die Ausbildung der Messerträger besteht aus walzenförmigen Körpern, die einseitig eine geringe Abflachung aufweisen. Von diesem nächstkommenden Stand der Technik geht die vorliegende Anmeldung aus.

Das Dokument EP-A-0829322 offenbart eine Hochgeschwindigkeitsschere zum Querteilen von Walzband mit zylinderförmigen Messerträgern, die Schneidmesser tragen. Eine Kassettenkonstruktion für die Messerträger in einem Rahmen ist nicht vorgesehen. Eine achsparallele Verschiebung der Synchronisationsräder ist nicht angesprochen. Die Schneidtrommeln sind in Schwingen angeordnet, die mit Anstellvorrichtungen verbunden sind.

Die Druckschrift US-A-1,948,139 offenbart nicht, dass die Messerträger mit festem gegenseitigem Abstand in einer gemeinsamen Scherenkassette innerhalb eines äußeren Rahmens gelagert sind. Über eine Verschiebung der Synchronisationsräder ist nichts ausgesagt.

Das Dokument DE-C-464 803 beschreibt eine Schere für bewegtes Walzgut, wobei die Zahnkörper selbst die Messerträger bilden. Dabei weisen die einzelnen Zähne der Zahnkörper Einschnitte auf, so dass zwei Zahnkränze vorhanden sind, zwischen denen das Walzgut hindurch bewegt wird. Die Schneidmesser, welche sich jeweils im Berührungspunkt der Teilkreise treffen, sind an einer oder mehreren Stellen zwischen den beiden Zahnkränzen angeordnet. Die Schneidmesser sind gegen Lockerung mit Stiften gesichert. Von einer Verschiebung der Synchronisationsräder von flachen Messerträgern in einer heb- und senkbaren Scherenkassette innerhalb eines Rahmens ist nicht die Rede.

Ausgehend vom vorgenannten Stand der Technik liegt der Erfindung die Aufgabe zugrunde, eine Hochgeschwindigkeitsschere zum Schneiden von Warm- und/oder Kaltband so weiter zu bilden, daß exakte Schnitte bei Bandgeschwindigkeiten bis ca. 20 m/sec auch bei geringer Banddicke bis beispielsweise 0,8 mm sicher durchführbar sind, und der hierfür erforderliche konstruktive, mechanische, insbesondere getriebetechnische sowie steuerungstechnische Aufwand minimiert wird.

Zur Lösung der Aufgabe wird mit der Hochgeschwindigkeitsschere der im Oberbegriff von Anspruch 1 genannten Art mit der Erfindung vorgesehen, dass die Messerträger mit einem Paar Längsseiten und einem Paar Schmalseiten als abgeflachte Körper, und von diesen jeweils zwei Schmalseiten mit in Schnittposition zusammenwirkbaren Messeranordnungen ausgebildet sind, und diese mittels ihnen innerhalb der Scherenkassette zugeordneten, in stetigem Eingriff befindlichen Zahnrädern in gegenläufige Rotation synchronisiert und die Messerträgerwellen in Exzenterbuchsen gelagert sind, die über ein gemeinsames Getriebe mit fest vorgegebenem Übersetzungsverhältnis zwischen den Exzenterbuchsen und den Messerträgerwellen angetrieben sind und dass die Zahngeometrie der Synchronisationsräder der Messerträger so ausgelegt wird, dass diese eine Achsparallelverschiebung von beispielsweise +/- 15 mm zulässt.

Bei der erfindungsgemäß vorgeschlagenen Lösung sitzen beide Trommeln in einem geschlossenen starren Baustück, was bedeutet, daß die Kraftwege kurz sind und die Synchronisationszahnräder ständig im Eingriff bleiben. Eine große trichterförmige Öffnung für den Bandanfang auch mit skiartiger Aufbiegung ist gewährleistet. Die Gefahr von Beschädigungen der Schere durch aufgebogene Bänder ist reduziert.

Ein Verfahren zum Betrieb der Schere ist dadurch gekennzeichnet, daß beim Ein- bzw. Durchlauf eines Walzbandendes die beiden Messerträger in Horizontalstellung und die Scherenkassette innerhalb des äußeren Rahmens in eine angehobene Überführstellung gebracht wird.

Eine Ausgestaltung des Verfahrens beschreibt, daß der Anlauf der Schere unter rotativer Beschleunigung der Umdrehungszahl vorgenommen wird, wobei die Messerträger über die Exzenterbuchsen auf Abstand gestellt sind und die Scherenkassette mit ihren Lagerstücken abgesenkt bzw. angehoben wird.

Von Vorteil ist, daß die Beschleunigungszeit für den Anlauf der Schere durch das Übersetzungsverhältnis zwischen Exzenterbuchsen und Messerträgern bestimm wird.

Zweckmäßig ist, daß für einen exakten Bogenschnitt bei geringer Banddicke, z. B 0,8 mm, ein Gleichlauf beider Messerträger kleiner 0,5 mm eingehalten wird.

In weiterer Fortsetzung der Erfindung ist vorgesehen, daß für die fliegende Schere bei einer Bandlaufgeschwindigkeit bis 20 m/sec zur Ausführung eines Zwei-Messer-Bogenschnitts exakt eingespannte Bogenmesser verwendet werden.

Und schließlich sieht eine Ausgestaltung des Verfahrens nach der Erfindung vor, daß das Band zum Schnitt zwischen zwei Paaren von Treibem auf Zugspannung gehalten wird.

Weitere Einzelheiten, Merkmale und Vorteile der Erfindung ergeben sich aus der nachstehenden Erläuterung eines in den Zeichnungen schematisch dargestellten Ausführungsbeispieles. Es zeigen:
- Figur 1a: die Schere mit angehobener Scherenkassette beim Ein- bzw. Durchlauf eines Walzbandanfangs mit beiden Messerträgern in Horizontalstellung;
- Figur 1b bis 1d: einzelne Stellungsphasen der Messerträger bei ihrer rotativen Beschleunigung von Null auf Schnittdrehzahl;
- Figur 2: ein kinematisches Schema des Antriebs der Messerträger mit ihren Wellenlagerungen in Exzenterbuchsen;
- Figur 3a bis 3c: eine schematische Darstellung der Bewegungsabläufe der Messerträger und Exzenterbuchsen, ausgehend von der Über6 führstellung gemäß Fig. 3a bis zur Schneidposition in Fig. 3c;
- Figur 4a, 4b: die Seitenansicht der Schere in Überführposition Fig. 4a, und in Schneidposition Fig. 4b.

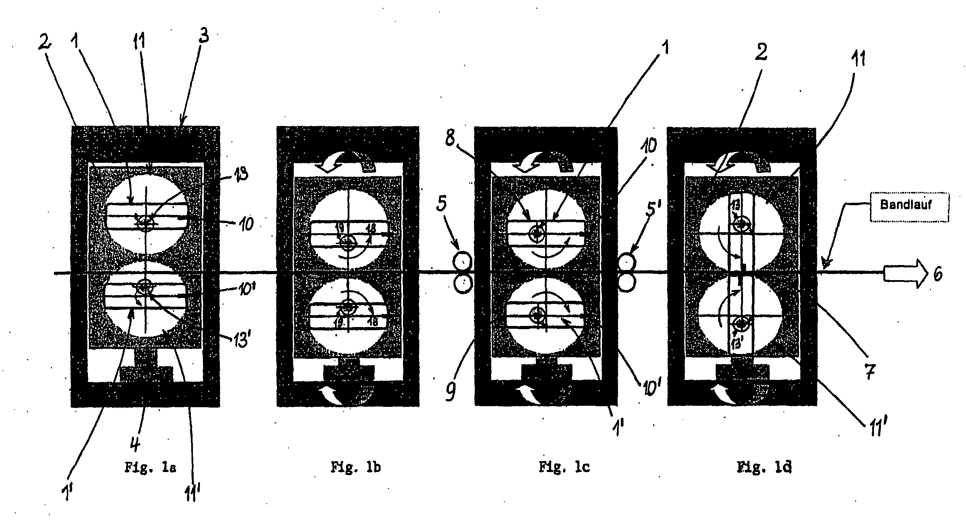

Die Zusammenschau der Figuren 1 bis 4 zeigt die Hochgeschwindigkeitsschere zum Querteilen von Walzband mit paarweise gegenüberliegenden, in Rotation antreibbaren Messerträgern 1, 1'.

Die Messerträger 1, 1' sind beidseitig in einer gemeinsamen Scherenkassette 2 mit festem gegenseitigem Abstand gelagert, wobei die Scherenkassette 2 innerhalb eines äußeren Rahmens 3 angeordnet ist, und der Scherenkassette 2 Hubmittel 4 zum Anheben bzw. Absenken innerhalb des äußeren Rahmens 3 zugeordnet sind.

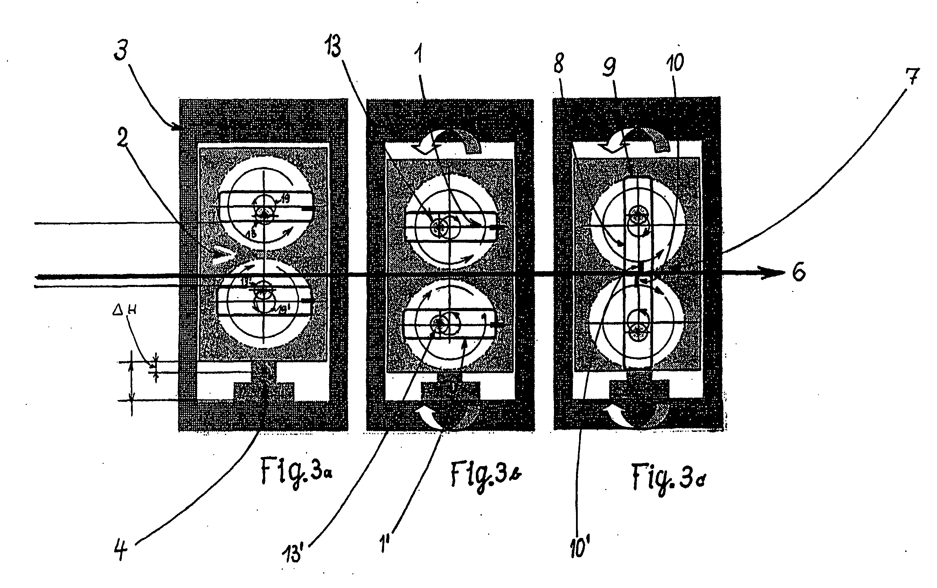

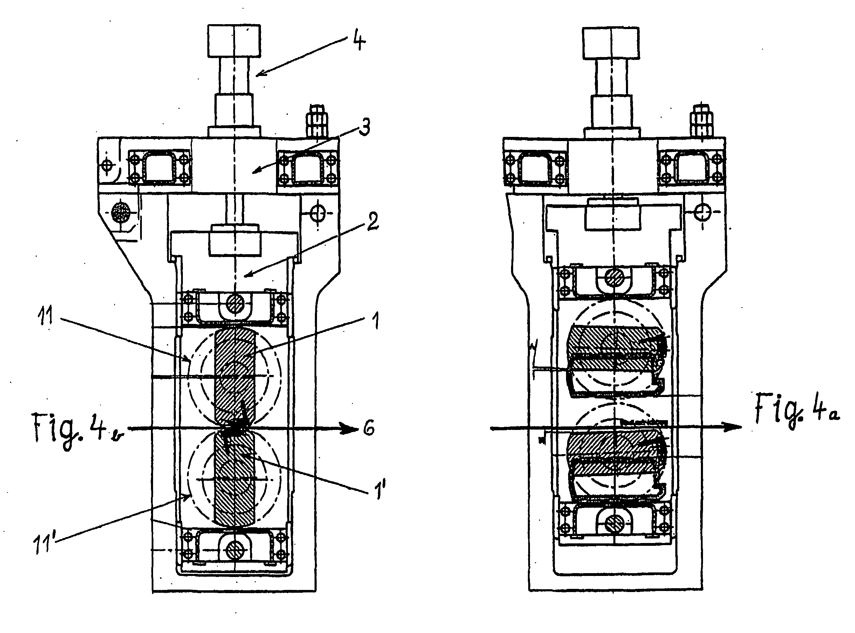

Diese Hubmittel 4 können entweder unterhalb der Scherenkassette 2 angeordnet sein, wie dies die Figuren 1 und 3 zeigen, wobei die Hubmittel das Gewicht der Scherenkassette 2 durch Druckeinwirkung überwinden, oder sie können gemäß Fig. 4a, 4b oberhalb des äußeren Rahmens 3 angeordnet sein, und die Scherenkassette 2 unter Zug anheben, wobei es sich in beiden Fällen um gleichwirkende Mittel handelt.

Entsprechend einer Ausgestaltung können der Schere entsprechend der Darstellung in Figur 1c Mittel 5, 5' zum Führen des Bandes 6 relativ zur Schnittposition 7 zugeordnet sein. Es können dies, wie an sich bekannt, je ein Paar Treiber 5, 5' sein, welche das Band 6 zumindest in der Schneidposition 7 unter Zugspannung halten.

Wie beispielsweise die Figur 1c deutlich erkennen läßt, ist jeder Messerträger 1, 1' als rechteckiger Körper mit einem Paar Längsseiten 8 und einem Paar Schmalseiten 9 ausgebildet, wobei jeweils zwei Schmalseiten 9 mit einer in Schnittposition 7 zusammen wirkbaren Messeranordnung 10, 10' ausgebildet sind.

Fig. 1d zeigt, daß die Messerträger 1, 1' innerhalb der Scherenkassette 2 mittels ihnen zugeordneten, mit einander im stetigen Eingriff befindlichen Zahnrädern 11, 11' in gegenläufiger Rotation synchronisiert sind.

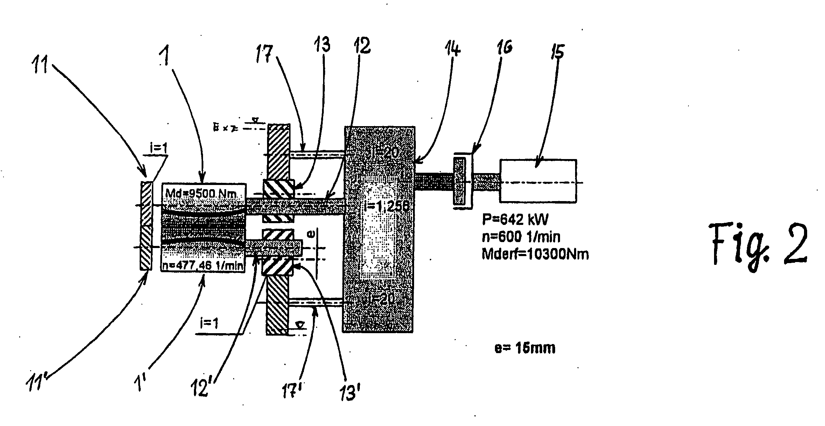

Eine wesentliche Ausgestaltung der Erfindung ergibt sich daraus, daß die Messerträgerwellen 12, 12', wie dies insbesondere der Figur 2 zu entnehmen ist, in Exenterbuchsen 13, 13' gelagert sind, die über ein gemeinsames Getriebe 14 mit einem fest vorgegebenen Übersetzungsverhältnis zwischen den Exenterbuchsen 13, 13' und den Messerträgerwellen 12, 12' angetrieben sind. Wie hierzu insbesondere der Figur 1b zu entnehmen ist, ist die Drehrichtung 18 der Messerträger 1, 1' relativ zur Drehrichtung 19 der Exenterbuchsen gegenläufig.

Dadurch ergibt sich, daß entsprechend dem fest vorgegebenen Übersetzungsverhältnis jeweils nach einer Anzahl von Umdrehungen der Messerträger 1, 1' eine Schneidposition 7 erreicht wird, bei der wie dies Figur 1d zeigt, die Exzenterbuchsen 13, 13' im oberen Zenitpunkt 13 und im unteren Zenitpunkt 13' angelangt sind, wobei dann die Messeranordnungen 10, 10' zum Schnitt des Bandes ineinander greifen.

Gemäß Figur 1a und 3a sind die Messerträger 1, 1' in der Überführungsposition jeweils mit der Scherenkassette 2 angehoben, wobei dann die Exzenterbuchse 13 auf ihrer Kreisbahn 19 im unteren Zenit ihrer Kreisbahn, und die Exzenterbuchse 13' bei ihrer Kreisbahn 19' im oberen Zenit angelangt ist, und dabei die Messerträger 1, 1' den größtmöglichen zulässigen Abstand zwischen sich einnehmen.

In Figur 4a ist eine Seitenansicht der Schere mit Bandlauf 6 in Durchlaufposition und in Figur 4b in Schneidposition dargestellt.

Wie Figur 4a ebenso wie Figuren 1a und 3a zeigen, sind die beiden Messerträger 1, 1' beim Ein- bzw. Durchlauf eines Walzbandanfanges mit beiden Messerträgern 1, 1' in Horizontalstellung und mit angehobener Position der Scherenkassette 2 innerhalb des äußeren Rahmens 3 in eine Überführstellung gebracht, die es dem Bandanfang erlaubt, auch bei skiartig aufgebogenem Kopf problemlos durch die Schere hindurchgeführt zu werden.

Im Anschluß daran wird zum Anlauf der Schere unter rotativer Beschleunigung der Umdrehungszahl bei auf Abstand gestellten Messerträgern 1, 1' die Scherenkassette 2 mit ihren Lagerstücken abgesenkt. Die Beschleunigungszeit für den Anlauf der Schere wird durch das Übersetzungsverhältnis zwischen Exzenterbuchsen 13, 13' und Messerträgern 1, 1' bestimmt.

Wesentlich ist die Maßnahme, daß die Zahngeometrie der Synchronisationsräder der Messerträger 1, 1' so ausgelegt wird, daß diese eine Achsparallelverschiebung von beispielsweise +/- 15 mm zuläßt. Für einen problemlosen Betrieb der Schere ist wichtig, daß für einen exakten Bogenschnitt bei geringer Banddicke, zum Beispiel 0,8 mm, einen Gleichlauf beider Messerträger 1, 1' kleiner 0,5 mm eingehalten wird. Dadurch werden Beschädigungen der Messeranordnungen 10, 10' vermieden.

Bei der fliegenden Schere für eine Bandlaufgeschwindigkeit bis zu 20 m/sec ist zur Ausführung eines sauberen Zwei-Messer-Bogenschnitts von wesentlicher Bedeutung, daß hierfür exakt eingespannte Bogenmesser verwendet werden, wie dies beispielsweise der Figur 2 entnommen werden kann.

Für einen korrekten Schnitt ist ebenso erforderlich, daß das Band 6 gemäß Darstellung in Figur 1c zwischen zwei Paaren von Treibern 5, 5' auf Zugspannung gehalten wird.

### Bezugszeichenliste

- 1.: Messerträger
- 2.: Scherenkassette
- 3.: äußerer Rahmen
- 4.: Hubmittel
- 5.: Mittel z. Führung des Bandes
- 6.: Band
- 7.: Schnittposition
- 8.: Längsseite
- 9.: Schmalseite
- 10.: Messeranordnung
- 11.: Zahnrad
- 12.: Messerträgerwelle
- 13.: Exzenterbuchse
- 14.: Getriebe
- 15.: Motor
- 16.: Kupplung
- 17.: Exzenterbuchsen-Antrieb
- 18.: Drehrichtung Messerträger
- 19.: Drehrichtung Exzenterbuchsen

## Patentansprüche

1. Hochgeschwindigkeitsschere zum Querteilen von Walzband mit paarweise gegenüberliegenden, in Rotation antreibbaren Messerträgern (1, 1'), die mit festem gegenseitigem Abstand in einer gemeinsamen Scherenkassette (2) innerhalb eines äußeren Rahmens (3) gelagert sind, wobei der Scherenkassette (2) Hubmittel (4) zum Heben und Senken innerhalb des Rahmens (3) sowie Mittel (5) zum Führen des Bandes (6) relativ zur Schnittposition (7) zugeordnet sind und jeder Messerträger (1, 1') als abgeflachter Körper ausgebildet ist,
**dadurch gekennzeichnet,**
**dass** die Messerträger (1, 1') mit einem Paar Längsseiten (8) und einem Paar Schmalseiten (9) als abgeflachte Körper, und von diesen jeweils zwei Schmalseiten (9) mit in Schnittposition (7) zusammenwirkbaren Messeranordnungen (10) ausgebildet sind, und diese mittels ihnen innerhalb der Scherenkassette (2) zugeordneten, in stetigem Eingriff befindlichen Zahnrädern (11, 11') in gegenläufige Rotation synchronisiert und die Messerträgerwellen (12,1 2') in Exzenterbuchsen (13, 13') gelagert sind, die über ein gemeinsames Getriebe (14) mit fest vorgegebenem Übersetzungsverhältnis zwischen den Exzenterbuchsen (13, 13') und den Messerträgerwellen (12, 12') angetrieben sind und dass die Zahngeometrie der Synchronisationsräder der Messerträger (1, 1') so ausgelegt wird, dass diese eine Achsparallelverschiebung von beispielsweise +/- 15 mm zuläßt.

2. Verfahren zum Betrieb der Schere nach Anspruch 1,
**dadurch gekennzeichnet,**
**dass** beim Ein- bzw. Durchlauf eines Walzbandendes die beiden Messerträger (1, 1') in Horizontalstellung und die Scherenkassette (2) innerhalb des äußeren Rahmens (3) in eine angehobene Überführstellung gebracht wird.

3. Verfahren nach Anspruch 2,
**dadurch gekennzeichnet,**
**dass** der Anlauf der Schere unter rotativer Beschleunigung der Umdrehungszahl vorgenommen wird, wobei die Messerträger (1, 1') über die Exzenterbuchsen (13, 13) auf Abstand gestellt sind und die Scherenkassette (2) mit ihren Lagerstücken abgesenkt wird.

4. Verfahren nach Anspruch 2 oder 3,
**dadurch gekennzeichnet,**
**dass** die Beschleunigungszeit für den Anlauf der Schere durch das Übersetzungsverhältnis zwischen Exzenterbuchsen (13, 13') und Messerträgern (1, 1') bestimmt wird.

5. Verfahren nach einem oder mehreren der Ansprüche 2 bis 4,
**dadurch gekennzeichnet,**
**dass** für einen exakten Bogenschnitt bei geringer Banddicke, z. B. 0,8 mm, ein Gleichlauf beider Messerträger (1, 1') kleiner, 0,5 mm eingehalten wird.

6. Verfahren nach einem oder mehreren der Ansprüche 2 bis 5,
**dadurch gekennzeichnet,**
**dass** für die fliegende Schere bei einer Bandlaufgeschwindigkeit bis 20 m/sec zur Ausführung eines 2-Messer-Bogenschnitts exakt eingespannte Bogenmesser verwendet werden.

7. Verfahren nach einem oder mehreren der Ansprüche 2 bis 6,
**dadurch gekennzeichnet,**
**dass** das Band (6) zum Schnitt zwischen zwei Paaren von Treibern (5, 5') auf Zugspannung gehalten wird.

8. Verfahren nach einem oder mehreren der Ansprüche 2 bis 7,
**dadurch gekennzeichnet,**
**dass** die Exzenterbuchsen (13, 13') in eine zu den Messerträgern (1, 1') entgegengesetzte Rotation versetzt werden.

## Claims

1. High-speed cutter for cross-cutting rolled strip, with knife carriers (1, 1'), which are disposed opposite in pairs and drivable in rotation and which are mounted in fixed mutual spacing in a common cutter cassette (2) within an outer frame (3), wherein stroke means (4) for raising and lowering within the frame (3) as well as means (5) for guiding the strip (6) relative to the cutting position (7) are associated with the cutter cassette (2) and each knife carrier (1, 1') is constructed as a flattened body, **characterised in that** the knife carriers (1, 1') are constructed with a pair of longitudinal sides (8) and a pair of narrow sides (9) as flattened body, and of these each time two narrow sides (9) are constructed with knife arrangements (10), which are co-operable in cutting position (7) and which are synchronised in opposite rotation by means of gearwheels (11, 11') associated therewith within the cutter cassette (2) and disposed in constant engagement, and the knife carrier shafts (12, 12') are mounted in eccentric bushes (13, 13') driven by way of a common gear (14) with fixedly predetermined translation ratio between the eccentric bushes (13, 13') and the knife carrier shafts (12, 12'), and that the tooth geometry of the synchronisation wheels of the knife carriers (1, 1') are so designed that these permit an axially parallel displacement of, for example, plus or minus 15 millimetres.

2. Method of operating the cutter according to claim 1, **characterised in that** on entry or passage of a rolled strip end the two knife carriers (1, 1') are brought into horizontal setting and the cutter cassette (2) within the outer frame (3) into a raised transfer setting.

3. Method according to claim 2, **characterised in that** the run-up of the cutter is undertaken under rotational acceleration of the rotational speed, wherein the knife carriers (1, 1') are placed at a spacing above the eccentric bushes (13, 13) and the cutter cassette (2) together with its mounting chocks is lowered.

4. Method according to claim 2 or 3, **characterised in that** the acceleration time for run-up of the cutter is determined by the translation ratio between eccentric bushes (13, 13') and knife carriers (1, 1').

5. Method according to one or more of claims 2 to 4, **characterised in that** for a precise guillotine cut with smaller strip thickness of, for example, 0.8 millimetres a synchronism of the two knife carriers (1, 1') less than 0.5 millimetres is maintained.

6. Method according to one or more of claims 2 to 5, **characterised in that** for the overhung cutter at a strip running speed up to 20 m/sec guillotine knives accurately clamped in place are used for execution of a double knife guillotine cut.

7. Method according to one or more of claims 2 to 6, **characterised in that** the strip (6) is, for the cut, held at tension between two pairs of drivers (5, 5').

8. Method according to one or more of claims 2 to 7, **characterised in that** the eccentric bushes (13, 13') are set into a rotation opposite to the knife carriers (1, 1').

## Revendications

1. Cisaille à haute vitesse pour couper tranversalement une bande laminée, présentant des supports (1, 1') pour couteau opposés par paire, pouvant être entraînés en rotation, qui sont logés à une distance réciproque fixe dans une cassette (2) à cisaille commune dans un cadre (3) extérieur, la cassette (2) à cisaille présentant des moyens d'élévation (4) pour un mouvement ascendant et descendant dans le cadre (3) ainsi que des moyens (5) pour guider la bande (6) par rapport à la position de coupe (7) et chaque support (1, 1') pour couteau étant réalisé sous forme d'un corps aplati, **caractérisée en ce que** les supports (1, 1') pour couteau sont réalisés avec une paire de côtés longitudinaux (8) et une paire de petits côtés (9) en tant que corps aplati et les deux petits côtés (9) sont à chaque fois réalisés avec des dispositifs (10) à couteaux interagissant dans la position de coupe (7) et ceux-ci sont synchronisés en rotation opposée au moyen de roues dentées (11, 11') disposées dans la cassette (2) à cisaille et continuellement en prise et les arbres (12, 12') des supports pour couteau sont logés dans des coussinets excentriques (13, 13') qui sont entraînés via un dispositif d'entraînement (14) commun avec un rapport de transmission fixe défini entre les coussinets excentriques (13, 13') et les arbres (12, 12') des supports pour couteau et **en ce que** la géométrie des dents des roues de synchronisation des supports (1, 1') pour couteau est réalisée de telle manière qu'elle admet un déplacement parallèle des axes par exemple de +/- 15 mm.

2. Procédé pour le fonctionnement de la cisaille selon la revendication 1, **caractérisé en ce que** lors de l'entrée ou du passage d'une extrémité d'une bande laminée, les deux supports (1, 1') pour couteau sont amenés en position horizontale et la cassette (2) à cisaille est amenée dans le cadre extérieur (3) dans une position de transmission élevée.

3. Procédé selon la revendication 2, **caractérisé en ce que** le démarrage de la cisaille est réalisé avec une accélération rotative du nombre de tours, les supports (1, 1') pour couteau étant écartés via les coussinets excentriques (13, 13') et la cassette (2) à cisaille étant abaissée avec ses empoises.

4. Procédé selon la revendication 2 ou 3, **caractérisé en ce que** le temps d'accélération pour le démarrage de la cisaille est déterminé par le rapport de transmission entre les coussinets excentriques (13, 13') et les supports (1, 1') pour couteau.

5. Procédé selon l'une ou plusieurs des revendications 2 à 4, **caractérisé en ce que**, pour une coupe précise à une faible épaisseur de bande, par exemple de 0,8 mm, on maintient un synchronisme des deux supports (1, 1') pour couteau inférieur à 0,5 mm.

6. Procédé selon l'une ou plusieurs des revendications 2 à 5, **caractérisé en ce que** pour la cisaille volante, à une vitesse de la bande jusqu'à 20 m/sec, pour la réalisation d'une coupe à deux couteaux, on utilise des couteaux serrés de manière précise.

7. Procédé selon l'une ou plusieurs des revendications 2 à 6, **caractérisé en ce que** la bande (6), pour la coupe, est maintenue sous une contrainte de traction entre deux paires de taquets (5, 5').

8. Procédé selon l'une ou plusieurs des revendications 2 à 7, **caractérisé en ce que** les coussinets excentriques (13, 13') sont déplacés dans une rotation opposée par rapport aux supports (1, 1') pour couteaux.
